# EUROPEAN PATENT SPECIFICATION

(11) **EP 0 961 501 B1**
(45) Date of publication and mention of the grant of the patent: **11.08.2004**
(21) Application number: 99100372.4
(22) Date of filing: 15.01.1999
(51) Int. Cl.: H04N 9/31, G02B 27/14

(54) **Color image projecting device**
Farbbildprojektor
Projecteur d'images en couleurs

(30) Priority: 29.05.1998 US 87324
(43) Date of publication of application: 01.12.1999
(73) Proprietor: Primax Electronics Ltd, Hsi Chih Town, Taipei Hsien (TW)
(72) Inventor: Lin, Shang-Yi, c/o Primax Electronics Ltd., Hsi Chih Town, Taipei Hsien (TW)
(74) Representative: Lieck, Hans-Peter, Dipl.-Ing.

(56) References cited:
- EP-A- 0 443 586
- US-A- 4 943 154
- US-A- 5 267 029
- US-A- 5 575 548

## Description

The present invention relates to a color image projecting device in accordance with the pre-characterizing clause of claim 1 or 2.

A prior art projecting device of this kind provides a light path of one of the monochrome lights in the device which is considerably longer than the light paths of the two other monochrome lights. Accordingly, since the travelling distances of the monochrome lights affect their intensities, two optical lenses have to be installed in the longer light path to converge the respective light so as to compensate for the loss in light intensity. However, the installation of the two optical lenses renders the structure of the light splitting device complicated and costly.

This in mind, the invention as claimed aims at simplifying the structure of any such projecting device.

The present invention provides a color image projecting device as defined in claims 1 or 2.

The aim is achieved by the invention in that its light splitting device employs two polarization beam splitting mirrors in addition to two dichroic mirrors to separate three polarized monochrome lights and the three modulating devices modulate these polarized monochrome lights, at the same time changing their polarization. In this way the travelling distances of the three monochrome lights can be made equal.

In the following, the invention is illustrated by way of example on the background of the prior art with reference to the accompanying drawings, in which
Fig. 1 is a schematic view of a prior art projecting device of an LCD projector,
Fig. 2 is a schematic view of a projecting device of an LCD projector according to the present invention,
Fig. 3 is a schematic diagram of a dichroic-polarization beam splitter prism of Fig. 2,
Fig. 4 is a schematic diagram of one of the modulating devices of Fig. 2,
Fig. 5 is a schematic diagram of the illumination device of the projecting device shown in Fig. 2 including a light separating device,
Fig. 6 is a schematic diagrams of an alternative light separating device and
Fig. 7 is a schematic view of an LCD projector similar to that one of Fig. 2 yet employing the light separating device of Fig. 6.

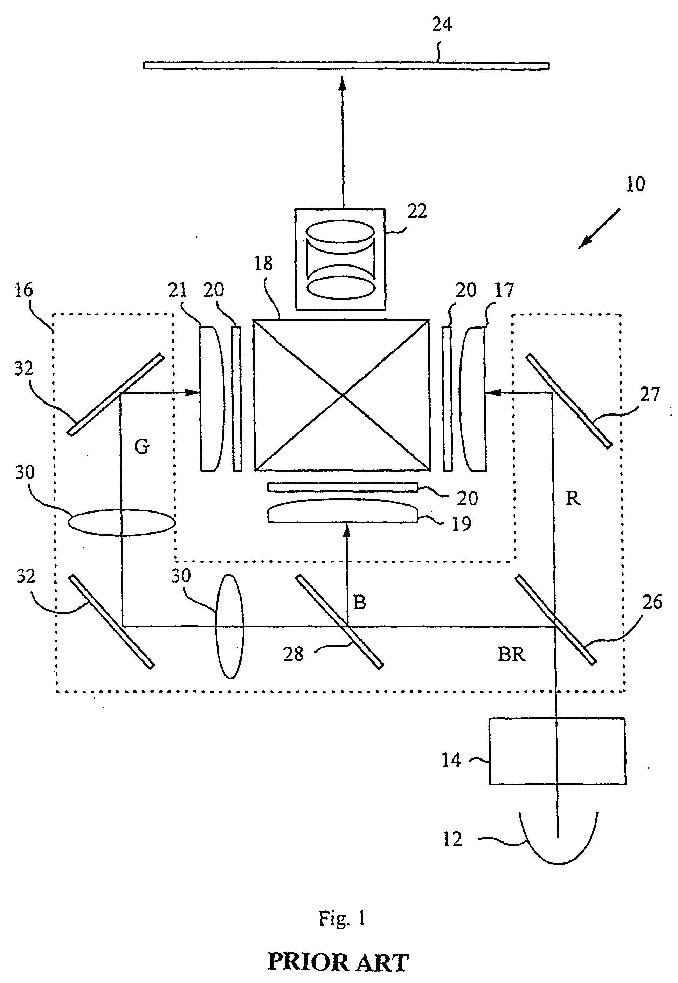

The prior art projecting device 10 of Fig. 1 comprises a light source 12 that produces a white light beam, a uniform illumination device 14 installed in front of the light source 12 for converging the white light emitted from the light source 12 into a uniformly distributed rectangular light beam, a light splitting device 16 for separating the rectangular light beam into red, green and blue color input light beams, a dichroic prism 18 having three input sides and an output side for synthesizing the three input light beams into an output light beam, three modulating panels 20 each formed by a transparent monochrome liquid crystal panel and separately installed in front of the three input sides of the dichroic prism 18 for modulating the three input light beams, three focussing lenses 17, 19 and 21 separately installed in front of the three modulating panels 20 for focussing the three input light beams from the light splitting device 16 onto the three modulating panels 20, and a projecting lens 22 installed in front of the output side of the dichroic prism 18 for projecting the synthesized output light beam from the dichroic prism 18 onto a screen 24. Each of the modulating panels 20 is adapted for displaying a monochrome image and the dichroic prism 18 synthesizes the three monochrome images to form the output color image.

The light separating device 16 comprises a first dichroic mirror 26 for separating the red light from the rectangular light beam from the uniform illumination device 14, a reflecting mirror 27 for reflecting the red light from the first dichroic mirror 26 onto the focussing lens 17, a second dichroic mirror 28 for separating light reflected from the first dichroic mirror 26 by reflecting blue light to the focussing lens 19, two optical lenses 30 and two reflecting mirrors 32 for passing and reflecting green light to the focussing lens 21. The figure clearly shows that the distance traveled by the green light is much longer than that of the red and blue lights. Since travelling distances affect light intensities, the two optical lenses 30 installed in front of the two reflecting mirrors 32 are essential to converge the green light so as to compensate for the loss of its light intensity. However, as mentioned before, the installation of the two optical lenses 30 renders the structure of the light splitting device 16 complicated and costly.

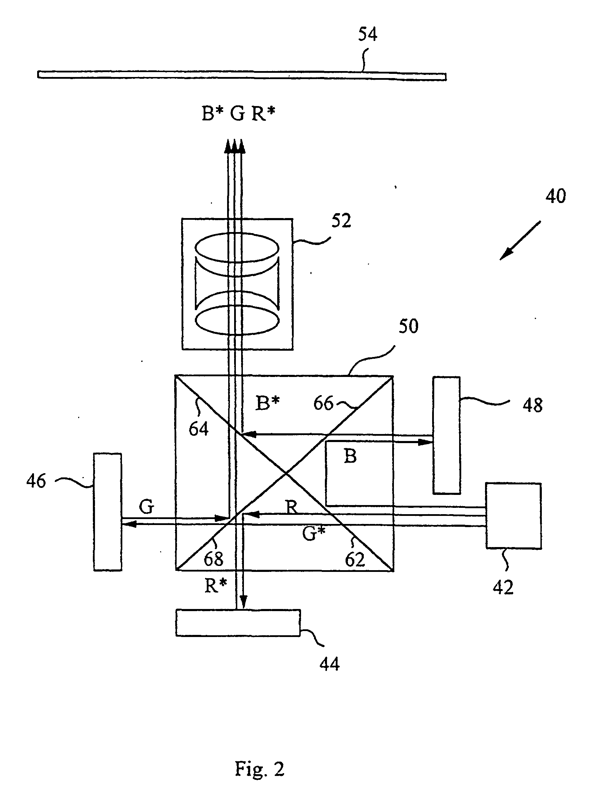

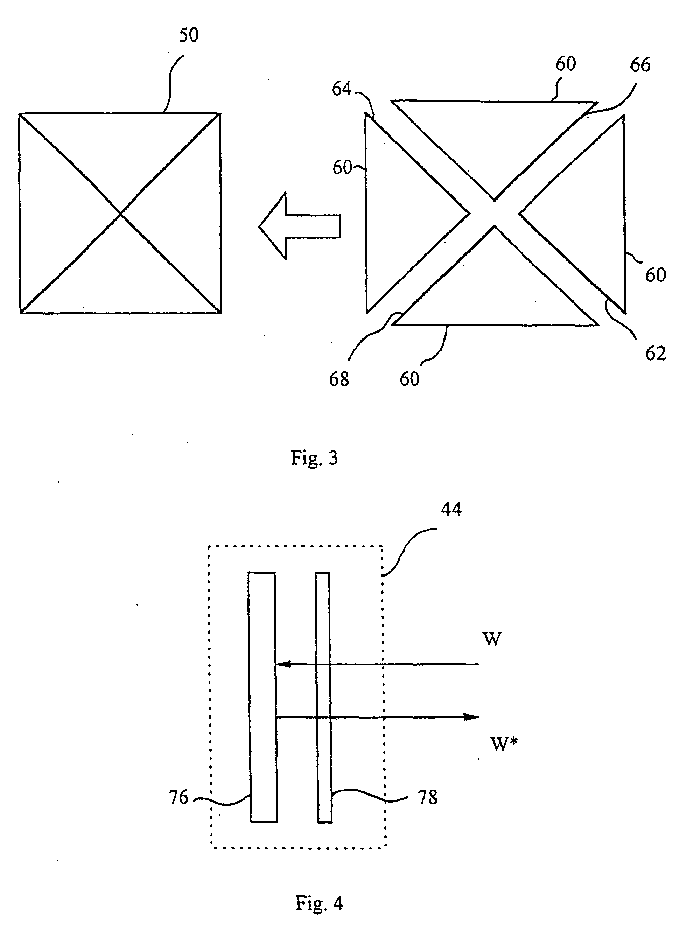

Fig. 2 shows a projecting device 40 of an LCD projector, this projecting device being constructed according to the present invention. Fig. 3 is a schematic diagram of a dichroic-polarization beam splitter prism 50 in Fig. 2 and Fig. 4 is a schematic diagram of a modulating device 44 in Fig. 2. The projecting device 40 comprises an illumination device 42, three modulating devices 44, 46 and 48, a dichroic-polarization beam splitter prism 50 and a projecting lens 52. The illumination device 42 emits a uniformly distributed approximately white light beam which comprises red, green and blue colors, each with distinct polarizations. For example, the illumination device 42 of the present invention emits a polarized light comprising red R, green G* and blue B polarized lights wherein the polarization of the green G* polarized light is different from the other polarized lights R and B. The three modulating devices 44, 46 and 48 are used for modulating and shifting the polarization of the three polarized monochrome lights by utilizing a method involving reflection of light. The dichroic-polarization beam splitter prism 50 receives and sends the three polarized lights R, G* and B to the three corresponding modulating devices 44, 46, and 48 where each polarized light undergoes processing, modulation, and change in polarization with synthesizing of the three polarized monochrome lights and formation of an output light beam. The projecting lens 52 is installed in front of the output side of the dichroic-polarization beam splitter prism 50 for projecting the output light beam synthesized by the three polarized monochrome lights and emitted from the output side of the dichroic-polarization beam splitter prism 50 to a screen 54.

The dichroic-polarization beam splitter prism 50 comprises four identical triangular prisms 60, each having a thin reflective coating on their interfaces. The dichroic-polarization beam splitter prism 50 further comprises a first dichroic mirror 62 and a second dichroic mirror 64 installed within the dichroic-polarization beam splitter prism 50 along the first diagonal line, and a first polarization beam splitting mirror 66 and a second polarization beam splitting mirror 68 installed within the dichroic-polarization beam splitter prism 50 along the second diagonal line perpendicular to the first and second dichroic mirrors.

Each of the three modulating devices 44, 46 and 48 comprises a mirror-type optical modulator 76 for modulating and reflecting an incident light to generate a modulated light, and a quarter-wave retarder 78 for retarding both the incident light and modulated light by a quarter of a wavelength so that the incident light of the modulating device and the modulated light generated by the modulating device have opposite polarizations. The mirror-type optical modulator 76 can be a digital micro-mirror device or a mirror-type liquid crystal display.

After the polarized trichrome light emitted from the illumination device 42 enters the dichroic-polarization beam splitter prism 50, it is separated by the first dichroic mirror 62 into a first blue polarized monochrome light B and a polarized dichrome light consisting of a red polarized light R and green polarized light G*. The blue polarized light B is transmitted to the first polarization beam splitting mirror 66 while the red polarized light R and green polarized light G* light is transmitted to the second polarization beam splitting mirror 68. The first polarization beam splitting mirror 66 has a special coating and can reflect a P-STATE polarized light and pass an S-STATE polarized light. Thus, the blue polarized light B is transmitted by the first polarization beam splitting mirror 66 to the first modulating device 48 which forms and reflects a modulated light B* which is transmitted by the first polarization beam splitting mirror 66 to the second dichroic mirror 64. The second polarization beam splitting mirror 68 passes P-STATE polarized light and reflects S-STATE polarized light so that the red polarized light R is reflected to the second modulating device 44 where it is modulated into red polarized light R* and the green polarized light G* is transmitted to the third modulating device 46 where it is modulated into green polarized light G. Both modulated lights are transmitted by the second polarization beam splitting mirror 68 to the second dichroic mirror 64. Finally, the second dichroic mirror 64 will reflect the blue polarized light B* and pass the red polarized light R* and green polarized light G into the projecting lens 52 to form a synthesized polarized trichrome light B*GR* which is projected onto the screen 54. The simple structure of the projecting device 40 of the present invention uses the dichroic-polarization beam splitter prism 50 to separate and synthesize the trichrome light beam where the traveling distances for each of the polarized light beams are approximately equal and shorter than the distances of the input light beams of the prior art projecting device 10.

The dichroic-polarization beam splitter prism 50 uses a set of two dichroic mirrors 62, 64 and two polarization beam splitting mirrors 66, 68 to separate and individually modulate the three polarized lights. Therefore, the illumination device 42 must provide the dichroic-polarization beam splitter prism 50 with a polarized trichrome light comprising a polarized monochrome light and a dichroic polarized light with a different polarization for final output of a perfectly synthesized trichrome light beam.

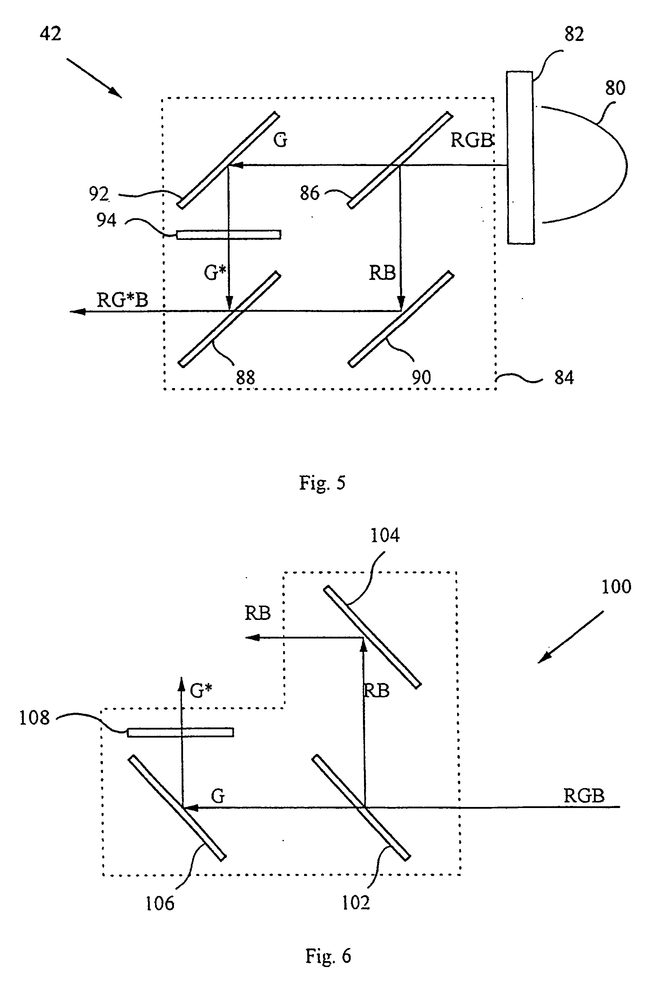

Please refer to Fig.5. Fig.5 is a schematic diagram of the illumination device 42 of the projecting device 40 of an LCD projector. The illumination device 42 comprises a light source 80 for generating a trichrome unpolarized light RR*GG*BB* which comprises red, green and blue lights, a light polarizing device 82 for transforming the trichrome unpolarized light RR*GG*BB* into a polarized trichrome light RGB, and a light separating device 84 for separating the polarized trichrome light RGB into a green polarized light G and a polarized dichrome light RB. The light separating device 84 further comprises two dichroic mirrors 86, 88 for separating the green polarized light G from the polarized trichrome light RGB and synthesizing the green polarized light G* into a polarized trichrome light RG*B, two reflecting mirrors 90, 92 for reflecting the green polarized light G and the polarized dichrome light RB, and a half-wave retarder 94 for retarding and modulating the green polarized light G into the green polarized light G*. As shown in Fig.2, the illumination device 42 outputs a polarized trichrome light RG*B to the first dichroic mirror 62 of the dichroic-polarization beam splitter prism 50.

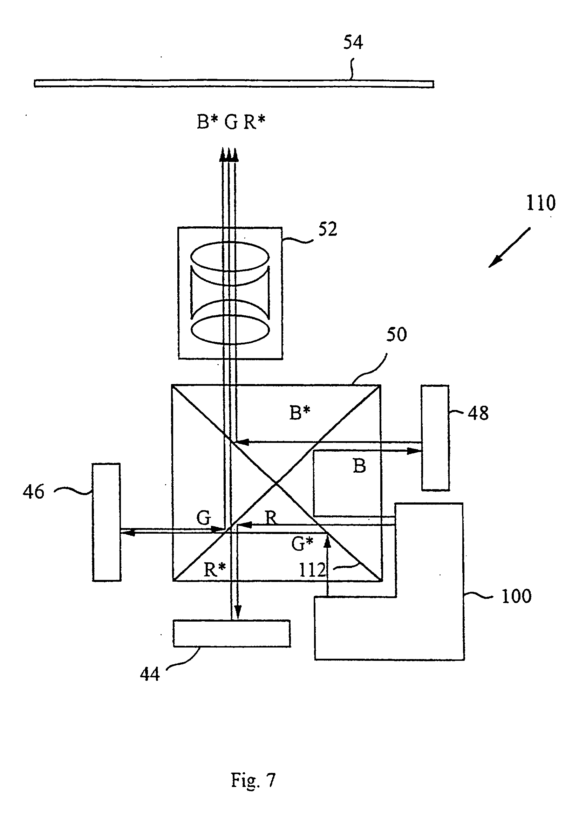

Please refer to Fig.6 and Fig.7. Figs.6 and 7 represent schematic diagrams of an alternative light separating device 100 and a projecting device 110 of an LCD projector, respectively, according to the present invention. The light separating device 100 has a far simpler structure than the previously described light separating device 84 and comprises a dichroic mirror 102, two reflecting mirrors 104 and 106, and a half-wave retarder 108. The output orientation of the green polarized light G* is perpendicular to that of the polarized dichrome light RB. Unlike the previously described dichroic mirror 62, the dichroic mirror 112 shown in Fig. 7 is coated to reflect both the green polarized light G* and the blue polarized light B while passing the red polarized light R.

From the foregoing, it is clear that the projecting devices 40 and 110 of the present invention are simple in structure and provide approximately equal light traveling distances that are shorter than that of the prior art device projecting device 10. Thus, special optical lenses to compensate for the loss of light intensity are not needed in projecting devices 40 and 110 thereby simplifying the structure, lowering manufacturing costs, and improving image quality.

## Claims

1. A color image projecting device (40) comprising:
an illumination device (42) for emitting a trichrome light comprising red, green and blue lights,
a light splitting device (50) for splitting said trichrome light into three monochrome lights and including first and second dichroic mirrors (62, 64), and
three modulating devices (44, 46, 48) defined as first, second and third modulating devices, each of them used for emanating a modulated monochrome light,
***characterized* in**
**that** said illumination device (42) provides a polarized trichrome light, the polarization of one of the monochrome lights included in said trichrome light being different from that of the two other monochrome lights,
**that** said modulating devices (44, 46, 48) are active to change the polarization of respective ones of said monochrome lights in addition to modulating them,
**that** said dichroic mirrors (62, 64) of said light splitting device (50) are arranged along a first common plane and said light splitting device also includes two polarization beam splitting mirrors (66, 68) arranged along a second common plane perpendicular to said first common plane,
wherein said first dichroic mirror (62) separates said polarized trichrome light from said illumination device (42) into a first polarized monochrome light and a polarized dichrome light and transmits these two lights separately to said first and second polarization beam splitting mirrors (66, 68), said first polarization beam splitting mirror (66) transmits the first polarized monochrome light to said first modulating device (48) and transmits the modulated light reflected from said first modulating device (48) to said second dichroic mirror (64), said second polarization beam splitting mirror (68) separates said polarized dichrome light into second and third polarized monochrome lights which are directly transmitted to said second and third modulating devices (44, 46) and then transmits the modulated lights from said second and third modulating devices (44, 46) to said second dichroic mirror (64), and the modulated lights transmitted from said first and second polarization beam splitting mirrors (66, 68) are synthesized by said second dichroic mirror (64) to form an output light beam.

2. A color image projecting device (110) comprising:
an illumination device (100) for emitting a trichrome light comprising red, green and blue lights,
a light splitting device (50) for splitting said trichrome light into three monochrome lights and including first and second dichroic mirrors (112, 64), and
three modulating devices (44, 46, 48) defined as first, second and third modulating devices, each of them used for emanating a modulated monochrome light,
***characterized* in**
**that** said illumination device (100) provides a polarized dichrome light (RB), including a first and a second polarized monochrome light, and a third polarized monochrome light (G*), the polarization of said third monochrome light (G*) being different from that of the two other monochrome lights,
**that** said modulating devices (44, 46, 48) are active to change the polarization of respective ones of said monochrome lights in addition to modulating them,
**that** said dichroic mirrors (62, 64) of said light splitting device (50) are arranged along a first common plane and said light splitting device also includes two polarization beam splitting mirrors (66, 68) arranged along a second common plane perpendicular to said first common plane,
wherein said first dichroic mirror (112) separates said polarized dichrome light from said illumination device (100) into said first polarized monochrome light (B) and said second polarized monochrome light (R) and reflects said third polarized monochrome light (G*) and transmits these three lights to said first and second polarization beam splitting mirrors (66, 68), said first polarization beam splitting mirror (66) transmits the first polarized monochrome light to said first modulating device (48) and transmits the modulated light reflected from said first modulating device (48) to said second dichroic mirror (64), said second polarization beam splitting mirror (68) reflects said second polarized monochrome light (R) and passes said third polarized monochrome light (G*) which are directly transmitted to said second and third modulating devices (44, 46) and then transmits the modulated lights from said second and third modulating devices (44, 46) to said second dichroic mirror (64), and the modulated lights transmitted from said first and second polarization beam splitting mirrors (66, 68) are synthesized by said second dichroic mirror (64) to form an output light beam.

3. The projecting device of claim 1 or 2 further comprising a projecting lens (52) for projecting the output light beam from the second dichroic mirror (64) onto a screen (54).

4. The projecting device of claim 1 or 2 wherein the light splitting device (50) is a rectangular trichromatic prism (50) having a first diagonal line and a second diagonal line perpendicular to each other, wherein the first and second dichroic mirrors (62, 64) are installed inside the trichromatic prism (50) along the first diagonal line, and the first and second polarization beam splitting mirrors (66, 68) are also installed inside the trichromatic prism (50) along the second diagonal line.

5. The projecting device (110) of claim 2 wherein said third polarized monochrome light (G*) and said polarized dichrome light (RB) are transmitted from the illumination device (100) to the first dichroic mirror (62) from the opposing sides of the first dichroic mirror (62).

6. The projecting device (40) of claim 1 wherein the polarized trichrome light emitted from the illumination device (42) is a single light beam which is directly transmitted to the first dichroic mirror (62)

7. The projecting device of claim 1 or 2 wherein the first monochrome light is reflected by the first polarization beam splitting mirror (66) to the first modulating device (48), and then the modulated light reflected from the first modulating device (48) is passed to the second dichroic mirror (64) through the first polarization beam splitting mirror (66).

8. The projecting device of claim 1 or 2 wherein the second polarized monochrome light is reflected to the second modulating device (44) by the second polarization beam splitting mirror (68) and the third polarized monochrome light is transmitted to the third modulating device (46) by transmitting through the second polarization beam splitting mirror (68), the modulated light reflected from the second modulating device (44) is transmitted to the second dichroic mirror (64) by transmitting through the second polarization beam splitting mirror (68), and the modulated light reflected from the third modulating device (46) is reflected to the second dichroic mirror (64) by the second polarization beam splitting mirror (68).

9. The projecting device of claim 1 or 2 wherein each of the modulating devices (44, 46, 48) comprises a mirror-type optical modulator (76) for modulating an incident light to generate a modulated light, and a quarter-wave retarder (78) for retarding both the incident light and the modulated light by a quarter wavelength so that the incident light of the modulating device and the modulated light generated by the modulating device have opposite polarizations.

10. The projecting device of claim 9 wherein the optical modulator (76) is a digital micro-mirror device.

11. The projecting device of claim 9 wherein the optical modulator (76) is a liquid crystal display panel.

12. The projecting device (40) of claim 1 wherein the illumination device (42) comprises a light source (80) for generating a trichrome unpolarized light which comprises red, green and blue lights, a light polarizing device (82) for converting the trichrome unpolarized light into a polarized trichrome light (RGB), a light separating device (84) for separating the polarized trichrome light into a monochrome light and a dichrome light, and a retarder (94) for changing the polarization of the monochrome light or dichrome light to generate said trichrome light (RG*B).

13. The projecting device (110) of claim 2 wherein the illumination device (100) comprises a light source (80) for generating a trichrome unpolarized light which comprises red, green and blue lights, a light polarizing device (82) for converting the trichrome unpolarized light into a polarized trichrome light (RGB), a light separating device (100) for separating the polarized trichrome light into a monochrome light (G) and a dichrome light (RB), and a retarder (108) for changing the polarization of the monochrome light or dichrome light to generate said monochrome light (G*) and dichrome light (RB).

## Patentansprüche

1. Farbbildprojektionsgerät (40) aufweisend:
ein Beleuchtungsgerät (42) zum Aussenden eines dreifarbigen Lichtes mit rotem, grünem und blauem Licht;
ein Lichtteilungsgerät (50) zum Aufspalten des dreifarbigen Lichtes in drei einfarbige Lichtarten und mit einem ersten und einem zweiten Zweifarben-Spiegel (62, 64); und
drei Modulierungsgeräte (44, 46, 48), die als erstes, zweites und drittes Modulierungsgerät definiert sind, von denen ein jedes zum Abgeben eines einfarbigen Lichtes dient,
**dadurch gekennzeichnet, dass**
das Beleuchtungsgerät (42) ein polarisiertes dreifarbiges Licht bereitstellt, wobei die Polarisierung einer der im dreifarbigen Licht enthaltenen einfarbigen Lichtarten verschieden von der der beiden anderen einfarbigen Lichtarten ist;
dass die Modulierungsgeräte (44, 46, 48) aktiv sind, um die Polarisierung der entsprechenden einfarbigen Lichtarten zusätzlich zu ihrer Modulierung zu ändern;
dass die Zweifarben-Spiegel (62, 64) des Lichtteilungsgeräts (50) entlang einer ersten gemeinsamen Ebene angeordnet sind und das Lichtteilungsgerät außerdem zwei Polarisierungsstrahlteilungsspiegel (66, 68) aufweist, die entlang einer senkrecht zur ersten gemeinsamen Ebene liegenden zweiten gemeinsamen Ebene angeordnet sind,
wobei der erste Zweifarben-Spiegel (62) das polarisierte dreifarbige Licht vom Beleuchtungsgerät (42) in ein erstes polarisiertes einfarbiges Licht und ein polarisiertes zweifarbiges Licht teilt und diese beiden Lichtarten getrennt an den ersten und zweiten Polarisierungsstrahlteilungsspiegel (66, 68) sendet, wobei der erste Polarisierungsstrahlteilungsspiegel (66) das erste polarisierte einfarbige Licht an das erste Modulierungsgerät (48) und das vom ersten Modulierungsgerät (48) reflektierte modulierte Licht an den zweiten Zweifarben-Spiegel (64) sendet, der zweite Polarisierungsstrahlteilungsspiegel (68) das polarisierte zweifarbige Licht in ein zweites und drittes polarisiertes einfarbiges Licht teilt, die direkt an das zweite und dritte Modulierungsgerät (44, 46) gesendet werden, und dann die modulierten Lichtarten vom zweiten und dritten Modulierungsgerät (44, 46) an den zweiten Zweifarben-Spiegel (64) sendet, und die vom ersten und zweiten Polarisierungsstrahlteilungsspiegel (66, 68) gesendeten modulierten Lichtarten durch den zweiten Zweifarben-Spiegel (64) synthetisiert werden, um einen Ausgangslichtstrahl zu bilden.

2. Farbbildprojektionsgerät (110) aufweisend:
ein Beleuchtungsgerät (100) zum Aussenden eines dreifarbigen Lichtes mit rotem, grünem und blauem Licht;
ein Lichtteilungsgerät (50) zum Aufspalten des dreifarbigen Lichtes in drei einfarbige Lichtarten und mit einem ersten und einem zweiten Zweifarben-Spiegel (112, 64); und
drei Modulierungsgeräte (44, 46, 48), die als erstes, zweites und drittes Modulierungsgerät definiert sind, von denen ein jedes zum Abgeben eines einfarbigen Lichtes dient,
**dadurch gekennzeichnet, dass**
das Beleuchtungsgerät (100) ein polarisiertes zweifarbiges Licht (RB) bereitstellt, das ein erstes und zweites polarisiertes einfarbiges Licht enthält, und ein drittes polarisiertes einfarbiges Licht (G*), wobei die Polarisierung des dritten einfarbigen Lichtes (G*) verschieden von der der beiden anderen einfarbigen Lichtarten ist;
dass die Modulierungsgeräte (44, 46, 48) aktiv sind, um die Polarisierung der entsprechenden einfarbigen Lichtarten zusätzlich zu ihrer Modulierung zu ändern;
dass die Zweifarben-Spiegel (112, 64) des Lichtteilungsgeräts (50) entlang einer ersten gemeinsamen Ebene angeordnet sind und das Lichtteilungsgerät außerdem zwei Polarisierungsstrahlteilungsspiegel (66, 68) aufweist, die entlang einer senkrecht zur ersten gemeinsamen Ebene liegenden zweiten gemeinsamen Ebene angeordnet sind,
wobei der erste Zweifarben-Spiegel (112) das polarisierte zweifarbige Licht vom Beleuchtungsgerät (100) in das erste polarisierte einfarbige Licht (B) und das zweite polarisierte einfarbige Licht (R) teilt und das dritte polarisierte einfarbige Licht (G*) reflektiert und diese drei Lichtarten an den ersten und zweiten Polarisierungsstrahlteilungsspiegel (66, 68) sendet, wobei der erste Polarisierungsstrahlteilungsspiegel (66) das erste polarisierte einfarbige Licht an das erste Modulierungsgerät (48) und das vom ersten Modulierungsgerät (48) reflektierte modulierte Licht an den zweiten Zweifarben-Spiegel (64) sendet, der zweite Polarisierungsstrahlteilungsspiegel (68) das zweite polarisierte einfarbige Licht (R) reflektiert und das dritte polarisierte einfarbige Licht (G*) durchgehen lässt, das direkt an das zweite und dritte Modulierungsgerät (44, 46) gesendet wird, und dann die modulierten Lichtarten vom zweiten und dritten Modulierungsgerät (44, 46) an den zweiten Zweifarben-Spiegel (64) sendet, und die vom ersten und zweiten Polarisierungsstrahlteilungsspiegel (66, 68) gesendeten modulierten Lichtarten durch den zweiten Zweifarben-Spiegel (64) synthetisiert werden, um einen Ausgangslichtstrahl zu bilden.

3. Projektionsgerät nach Anspruch 1 oder 2, ferner mit einer Projektionslinse (52) zum Projizieren des Ausgangslichtstrahls vom zweiten Zweifarben-Spiegel (64) auf einen Bildschirm (54).

4. Projektionsgerät nach Anspruch 1 oder 2, bei dem das Lichtteilungsgerät (50) ein rechtwinkliges Dreifarben-Prisma (50) mit einer ersten diagonalen Linie und einer zweiten diagonalen Linie ist, die senkrecht aufeinander stehen, der erste und zweite Zweifarben-Spiegel (62, 64) im Innern des Dreifarben-Prismas (50) entlang der ersten diagonalen Linie angeordnet sind, und der erste und zweite Polarisierungsstrahlteilungsspiegel (66, 68) ebenfalls im Innern des Dreifarben-Prismas (50) entlang der zweiten diagonalen Linie angeordnet sind.

5. Projektionsgerät (110) nach Anspruch 2, bei dem das dritte polarisierte einfarbige Licht (G*) und das polarisierte zweifarbige Licht (RB) vom Beleuchtungsgerät (100) von den gegenüberliegenden Seiten des ersten Zweifarben- Spiegels (62) zum ersten Zweifarben-Spiegel (62) gesendet werden.

6. Projektionsgerät (40) nach Anspruch 1, bei dem das vom Beleuchtungsgerät (42) emittierte polarisierte dreifarbige Licht ein einziger Lichtstrahl ist, der direkt zum ersten Zweifarben-Spiegel (62) gesendet wird.

7. Projektionsgerät nach Anspruch 1 oder 2, bei dem das erste einfarbige Licht vom ersten Polarisierungsstrahlteilungsspiegel (66) zum ersten Modulierungsgerät (48) reflektiert und dann das vom ersten Modulierungsgerät (48) reflektierte modulierte Licht zum zweiten Zweifarben-Spiegel (64) durch den ersten Polarisierungsstrahlteilungsspiegel (66) hindurch geleitet wird.

8. Projektionsgerät nach Anspruch 1 oder 2, bei dem das zweite polarisierte einfarbige Licht vom zweiten Polarisierungsstrahlteilungsspiegel (68) zum zweiten Modulierungsgerät (44) reflektiert und das dritte polarisierte einfarbige Licht zum dritten Modulierungsgerät (46) gesendet wird, indem es durch den zweiten Polarisierungsstrahlteilungsspiegel (68) hindurch geleitet wird, das vom zweiten Modulierungsgerät (44) reflektierte modulierte Licht zum zweiten Zweifarben-Spiegel (64) gesendet wird, indem es durch den zweiten Polarisierungsstrahlteilungsspiegel (68) hindurch geleitet wird, und das vom dritten Modulierungsgerät (46) reflektierte modulierte Licht zum zweiten Zweifarben-Spiegel (64) durch den zweiten Polarisierungsstrahlteilungsspiegel (68) reflektiert wird.

9. Projektionsgerät nach Anspruch 1 oder 2, bei dem jedes der Modulierungsgeräte (44, 46, 48) einen optischen Modulator (76) des Spiegeltyps zum Modulieren eines einfallenden Lichtes, um ein moduliertes Licht zu erzeugen, und einen Viertelwellenverzögerer (78) zum Verzögern sowohl des einfallenden Lichtes als auch des modulierten Lichtes um ein Viertel Wellenlänge aufweist, so dass das einfallende Licht des Modulierungsgeräts und das vom Modulierungsgerät erzeugte modulierte Licht eine entgegengesetzte Polarisierung haben.

10. Projektionsgerät nach Anspruch 9, bei dem der optische Modulator (76) ein digitales Mikrospiegelgerät ist.

11. Projektionsgerät nach Anspruch 9, bei dem der optische Modulator (76) ein Flüssigkristallanzeigefeld ist.

12. Projektionsgerät (40) nach Anspruch 1, bei dem das Beleuchtungsgerät (42) eine Lichtquelle (80) zum Erzeugen eines dreifarbigen nicht polarisierten Lichtes, das rotes, grünes und blaues Licht aufweist, ein Lichtpolarisierungsgerät (82) zum Wandeln des dreifarbigen nicht polarisierten Lichtes in ein polarisiertes dreifarbiges Licht (RGB), ein Lichttrenngerät (84) zum Trennen des polarisierten dreifarbigen Lichtes in ein einfarbiges und ein zweifarbiges Licht, und einen Verzögerer (94) zum Ändern der Polarisierung des einfarbigen oder des zweifarbigen Lichtes, um das dreifarbige Licht (RG*B) zu erzeugen, aufweist.

13. Projektionsgerät (110) nach Anspruch 2, bei dem das Beleuchtungsgerät (100) eine Lichtquelle (80) zum Erzeugen eines dreifarbigen nicht polarisierten Lichtes, das rotes, grünes und blaues Licht aufweist, ein Lichtpolarisierungsgerät (82) zum Wandeln des dreifarbigen nicht polarisierten Lichtes in ein polarisiertes dreifarbigen Licht (RGB), ein Lichttrenngerät (100) zum Trennen des polarisierten dreifarbigen Lichtes in ein einfarbiges (G) und ein zweifarbiges (RB) Licht, und einen Verzögerer (108) zum Ändern der Polarisierung des einfarbigen oder des zweifarbigen Lichtes, um das einfarbige Licht (G*) und das zweifarbige Licht (RB) zu erzeugen, aufweist.

## Revendications

1. Dispositif de projection d'images couleurs (40) comprenant:
un dispositif d'éclairage (42) destiné à émettre une lumière trichrome comprenant des lumières rouge, verte et bleue,
un dispositif de décomposition de la lumière (50) destiné à décomposer ladite lumière trichrome en trois lumières monochromes et comprenant un premier et un deuxième miroirs dichroïques (62, 64) et
trois dispositifs de modulation (44, 46, 48) définis en tant que premier, deuxième et troisième dispositifs de modulation, chacun d'eux étant utilisé pour émettre une lumière monochrome modulée,
**caractérisé en ce que**,
ledit dispositif d'éclairage (42) fournit une lumière trichrome polarisée, la polarisation de l'une des lumières monochromes comprises dans ladite lumière trichrome étant différente de celle des deux autres lumières monochromes,
lesdits dispositifs de modulation (44, 46, 48) fonctionnent pour modifier la polarisation des dispositifs respectifs desdites lumières monochromes en plus de les moduler,
lesdits miroirs dichroïques (62, 64) dudit dispositif de décomposition de la lumière (50) sont agencés le long d'un premier plan commun et ledit dispositif de décomposition de la lumière comprend également deux miroirs de décomposition du faisceau de polarisation (66, 68) agencés le long d'un deuxième plan commun perpendiculaire audit premier plan commun,
dans lequel ledit premier miroir dichroïque (62) sépare ladite lumière trichrome polarisée dudit dispositif d'éclairage (42) en une première lumière monochrome polarisée et en une lumière dichrome polarisée et transmet séparément ces deux lumières auxdits premier et deuxième miroirs de décomposition du faisceau de polarisation (66, 68), ledit premier miroir de décomposition du faisceau de polarisation (66) transmet la première lumière monochrome polarisée audit premier dispositif de modulation (48) et transmet la lumière modulée réfléchie depuis ledit premier dispositif de modulation (48) vers ledit deuxième miroir dichroïque (64), ledit deuxième miroir de décomposition du faisceau de polarisation (68) sépare ladite lumière dichrome polarisée en deuxième et troisième lumières monochromes polarisées qui sont directement transmises auxdits deuxième et troisième dispositifs de modulation (44, 46) et transmet ensuite les lumières modulées provenant desdits deuxième et troisième dispositifs de modulation (44, 46) audit deuxième miroir dichroïque (64), et les lumières modulées transmises à depuis ledit premier et deuxième miroirs de décomposition du faisceau de polarisation (66, 68) sont synthétisées par ledit deuxième miroir dichroïque (64) pour former un faisceau lumineux de sortie.

2. Dispositif de projection d'images couleurs (110) comprenant:
un dispositif d'éclairage (100) destiné à émettre une lumière trichrome comprenant des lumières rouge, verte et bleue,
un dispositif de décomposition de la lumière (50) destiné à décomposer ladite lumière trichrome en trois lumières monochromes et comprenant un premier et un deuxième miroirs dichroïques (112, 64) et
trois dispositifs de modulation (44, 46, 48) définis en tant que premier, deuxième et troisième dispositifs de modulation, chacun d'entre eux étant utilisés pour émettre une lumière monochrome modulée,
**caractérisé en ce que**,
ledit dispositif d'éclairage (100) fournit une lumière dichrome polarisée (RB), comprenant une première et une deuxième lumière monochrome polarisée, et une troisième lumière monochrome polarisée (G*), la polarisation de ladite troisième lumière monochrome (G*) étant différente de celle des deux autres lumières monochromes,
**en ce que** lesdits dispositifs de modulation (44, 46, 48) fonctionnent pour modifier la polarisation des dispositifs respectifs desdites lumières monochromes en plus de les moduler,
**en ce que** lesdits miroirs dichroïques (62, 64) dudit dispositif de décomposition de la lumière (50) sont agencés le long d'un premier plan commun et ledit dispositif de décomposition de la lumière comprend également deux miroirs de décomposition du faisceau de polarisation (66, 68) agencés le long d'un deuxième plan commun perpendiculaire audit premier plan commun,
dans lequel ledit premier miroir dichroïque (112) sépare ladite lumière dichrome polarisée depuis ledit dispositif d'éclairage (100) vers ladite première lumière monochrome polarisée (B) et vers ladite deuxième lumière monochrome polarisée (R) et réfléchit ladite troisième lumière monochrome polarisée (G*) et transmet ces trois lumières auxdits premier et deuxième miroirs de décomposition du faisceau de polarisation (66, 68), ledit premier miroir de décomposition du faisceau de polarisation (66) transmet la première lumière monochrome polarisée audit premier dispositif de modulation (48) et transmet la lumière modulée réfléchie depuis ledit premier dispositif de modulation (48) vers ledit deuxième miroir dichroïque (64), ledit deuxième miroir de décomposition du faisceau de polarisation (68) réfléchit ladite deuxième lumière monochrome polarisée (R) et transmet ladite troisième lumière monochrome polarisée (G*) qui sont directement transmises auxdits deuxième et troisième dispositifs de modulation (44, 46) et transmet ensuite les lumières modulées provenant desdits deuxième et troisième dispositifs de modulation (44, 46) vers ledit deuxième miroir dichroïque (64), et les lumières modulées transmises à partir desdits premier et deuxième miroirs de décomposition du faisceau de polarisation (66, 68) sont synthétisées par ledit deuxième miroir dichroïque (64) pour former un faisceau lumineux de sortie.

3. Dispositif de projection selon la revendication 1 ou 2 comprenant en outre une lentille de projection (52) destinée à projeter le faisceau lumineux de sortie provenant du deuxième miroir dichroïque (64) sur un écran (54).

4. Dispositif de projection selon la revendication 1 ou 2 dans lequel le dispositif de décomposition de la lumière (50) est un prisme trichromatique rectangulaire (50) ayant une première ligne diagonale et une deuxième ligne diagonale perpendiculaires l'une par rapport à l'autre, dans lequel les premier et deuxième miroirs dichroïques (62, 64) sont installés à l'intérieur du prisme trichromatique (50) le long de la première ligne diagonale, et les premier et deuxième miroirs de décomposition du faisceau de polarisation (66, 68) sont également installés à l'intérieur du prisme trichromatique (50) le long de la deuxième ligne diagonale.

5. Dispositif de projection (110) selon la revendication 2 dans lequel ladite troisième lumière monochrome polarisée (G*) et ladite lumière dichrome polarisée (RB) sont transmises à partir du dispositif d'éclairage (100) vers ledit premier miroir dichroïque (62) à partir des bords opposés du premier miroir dichroïque (62).

6. Dispositif de projection (40) selon la revendication 1 dans lequel la lumière trichrome polarisée émise à partir du dispositif d'éclairage (42) est un faisceau lumineux unique directement transmis vers le premier miroir dichroïque (62).

7. Dispositif de projection selon la revendication 1 ou 2 dans lequel la première lumière monochrome est réfléchie par le premier miroir de décomposition du faisceau de polarisation (66) vers le premier dispositif de modulation (48), et la lumière modulée réfléchie à partir du premier dispositif de modulation (48) est ensuite transmise au deuxième miroir dichroïque (64) à travers le premier miroir de décomposition du faisceau de polarisation (66).

8. Dispositif de projection selon la revendication 1 ou 2 dans lequel la deuxième lumière monochrome polarisée est réfléchie vers le deuxième dispositif de modulation (44) via le deuxième miroir de décomposition du faisceau de polarisation (68) et la troisième lumière monochrome polarisée est transmise au troisième dispositif de modulation (46) en transmettant à travers le deuxième miroir de décomposition du faisceau de polarisation (68), la lumière modulée réfléchie à partir du deuxième dispositif de modulation (44) est transmise au deuxième miroir dichroïque (64) en transmettant à travers le deuxième miroir de décomposition du faisceau de polarisation (68), et la lumière modulée réfléchie à partir du troisième dispositif de modulation (46) est réfléchie vers le deuxième miroir dichroïque (64) par le deuxième miroir de décomposition du faisceau de polarisation (68).

9. Dispositif de projection selon la revendication 1 ou 2 dans lequel chacun des dispositifs de modulation (44, 46, 48) comprend un modulateur optique de type miroir (76) destiné à moduler une lumière incidente pour générer une lumière modulée, et un retardateur quart d'onde (78) destiné à retarder à la fois la lumière incidente et la lumière modulée d'un quart de longueur d'onde de sorte que la lumière incidente du dispositif de modulation et la lumière modulée générée par le dispositif de modulation aient des polarisations opposées.

10. Dispositif de projection selon la revendication 9 dans lequel le modulateur optique (76) est un dispositif à micro miroir numérique.

11. Dispositif de projection selon la revendication 9 dans lequel le modulateur optique (76) est un panneau d'affichage à cristaux liquides.

12. Dispositif de projection (40) selon la revendication 1 dans lequel le dispositif d'éclairage (42) comprend une source lumineuse (80) destinée à générer une lumière non polarisée trichrome qui comprend des lumières rouge, verte et bleue, un dispositif de polarisation de la lumière (82) pour convertir la lumière non polarisée trichrome en une lumière trichrome polarisée (RGB), un dispositif de décomposition de la lumière (84) destiné à décomposer la lumière trichrome polarisée en une lumière monochrome et en une lumière dichrome, et un retardateur (94) pour changer la polarisation de la lumière monochrome ou de la lumière dichrome pour générer ladite lumière trichrome (RG*B).

13. Dispositif de projection (110) selon la revendication 2 dans lequel le dispositif d'éclairage (100) comprend une source lumineuse (80) destinée à générer une lumière non polarisée trichrome qui comprend des lumières rouge, verte et bleue, un dispositif de polarisation de la lumière (82) pour convertir la lumière non polarisée trichrome en une lumière trichrome polarisée (RGB), un dispositif de séparation de la lumière (100) destiné à décomposer la lumière trichrome polarisée en une lumière monochrome (G) et en une lumière dichrome (RB), et un retardateur (108) destiné à modifier la polarisation de la lumière monochrome ou de la lumière dichrome pour générer ladite lumière monochrome (G*) et la lumière dichrome (RB).
